# EUROPÄISCHE PATENTSCHRIFT

(11) **EP 2 497 176 B1**
(45) Veröffentlichungstag und Bekanntmachung des Hinweises auf die Patenterteilung: **25.01.2017**
(21) Anmeldenummer: 10754945.3
(22) Anmeldetag: 21.09.2010
(51) Int. Cl.: B60L 11/12, B60L 11/18, H02J 1/10, H02J 7/34, H02J 1/00, H01M 10/46, H02J 1/08, H02J 7/00

(54) **NIEDERVOLT-SPANNUNGSVERSORGUNG**
LOW VOLTAGE POWER SUPPLY
ALIMENTATION BASSE TENSION

(30) Priorität: 03.11.2009 DE 102009046305
(43) Veröffentlichungstag der Anmeldung: 12.09.2012
(73) Patentinhaber: Robert Bosch GmbH, 70442 Stuttgart (DE)
(72) Erfinder: MAASS, Sebastian, 70619 Stuttgart (DE)
(86) Internationale Anmeldenummer: PCT/EP2010/063877
(87) Internationale Veröffentlichungsnummer: WO 2011/054588

(56) Entgegenhaltungen:
- KR-A- 20080 047 638
- US-A1- 2005 287 411

## Beschreibung

### Stand der Technik

Bei heutigen Kraftfahrzeugen sind sämtliche elektrische Komponenten auf eine Niederspannung von 14 V ausgelegt. Zu solchen elektrischen Komponenten gehören Steuergeräte, Komfortelektronik und die Beleuchtung des Fahrzeugs. Aus Kosten- und Sicherheitsgründen werden momentan und mit hoher Sicherheit auch in Zukunft keine Komponenten für Hochvolt-Anwendungen ausgelegt, so dass sowohl Batterie- als auch Brennstoffzellenfahrzeuge ein Niederspannungsnetz besitzen dürften bzw. besitzen werden. Hierzu ist mindestens ein DC/DC-Wandler von Hochvolt-Spannung auf Niedervolt-Spannung notwendig, der weitere Kosten verursacht. Des Weiteren ist in der Regel eine Niedervolt-Batterie notwendig, die das Batterie- und/oder Brennstoffzellensystem während des Anschaltens und Abschaltens mit Spannung versorgt, so z.B. im Rahmen eines Systemchecks vor dem Anschalten bzw. dem Ausschalten.

DE 10 2007 027 902 A1 bezieht sich auf ein Batteriepack mit Umschaltung für Hochstrombetrieb. Es wird eine Schaltung offenbart, die mehrere Batterieanschlüsse und ein Anschlussklemmpaar umfasst, wobei die Batterieanschlüsse und das Anschlussklemmpaar jeweils einen Pluspol und einen Minuspol aufweisen, wobei die Schaltung zum wählbaren Verbinden der Batterieanschlüsse mit dem Anschlussklemmenpaar vorgesehen ist. Die Schaltung umfasst Schaltelemente, die mindestens zwei Untergruppen der Batterieanschlüsse wahlweise in Serie zur Spannungsaddition oder in Parallelschaltung zur Stromaddition zu mindestens einer Gruppe miteinander verbinden und diese mindestens eine Gruppe mit den Anschlussklemmen verbinden. Die Untergruppen umfassen jeweils einen oder eine Vielzahl von Batterieanschlüssen, die wiederum einem galvanischen Element zugeordnet sind.

Die US 2005/0287411 A1 offenbart einen Brennstoffzellenstapel, der einen Niederspannungsabgriff verwendet, und insbesondere einen Brennstoffzellenstapel mit einem oder mehreren Niederspannungsenergieabgriffen, um DC-Energie mit niedriger Spannung für Niederspannungsvorrichtungen in einem Brennstoffzeilensystem oder AC-Energie für andere Vorrichtungen in dem System bereitzustellen.

Die KR 2008 0047638 A offenbart ein Spannungsversorgungssystem für ein Elektrofahrzeug mit Hochspannungsmodulen und Niederspannungsmodulen.

Die Erfindung ist durch die Merkmale der unabhängigen Ansprüche 1 und 4 definiert, wobei weitere mögliche Ausführungsformen in den abhängigen Ansprüche definiert sind.

Für ein mit einer Brennstoffzelle ausgestattetes Fahrzeug bedeutet Verzicht auf die Niedervolt-Batterie und den Hochvolt/Niedervolt-DC/DC-Wandler, dass bei Vorhandensein einer Traktionsbatterie während des An-/Abschaltens des Systems, d.h. wenn die Brennstoffzelle noch nicht oder nicht mehr in Betrieb ist, ein Modul der Traktionsbatterie die Versorgung des Systems übernimmt. Das Vorhandensein einer Traktionsbatterie kann bei einem Fahrzeug, welches mit Brennstoffzellen ausgestattet ist, als Normalfall vorausgesetzt werden. Die fortschreitende Entwicklung verläuft dahingehend, dass eine Hybridisierung von Brennstoffzelle mit Batterie in Form eines Vollhybriden zukünftig in Form eines "Range Extenders" absehbar ist. Unter "Range Extender" wird ein System verstanden, welches eine große Batterie umfasst, aus der der Traktionsmotor hauptsächlich versorgt wird. Im Rahmen dieses Systems besteht eine Verbindung des Traktionsmotors, mit einem Aggregat, das aus chemisch gespeicherter Energie elektrischen Strom gewinnt, so z.B. eine Brennstoffzelle oder ein Verbrennungsmotor mit Generator, der die große Batterie nachlädt.

Aufgrund des geringen Energiebedarfes bedeutet das An-/Abschalten des Systems nur eine vernachlässigbare zusätzliche Belastung eines Moduls der Traktionsbatterie, so dass keine erhöhte Alterung zu erwarten ist. Dies ist gegebenenfalls durch einen Wechsel der für An- bzw. Abschaltvorgänge des Systems erforderlichen Moduls der Traktionsbatterie auszugleichen, so dass sichergestellt ist, dass nicht stets ein und dasselbe Modul belastet ist.

Während des Systembetriebs wird die Niedervolt-Spannungsversorgung von einem Zellstapel des Brennstoffzellenstapels übernommen. Diese Zusatzbelastung bedeutet nur eine geringfügige Veränderung des Versorgungszustandes des entsprechenden Zellstapels, der vernachlässigbar ist oder gegebenenfalls durch Gasversorgungskanäle mit größerem Querschnitt aufgefangen werden kann. Damit ergibt sich für diese Zellen automatisch eine bessere Gasversorgung und damit eine höhere Strombelastbarkeit, verglichen mit den restlichen innerhalb des Brennstoffzellenstapels angeordneten Brennstoffzellen. Generell gilt, dass durch die abgesenkte Brennstoffzellenbetriebsspannung, die sich insbesondere bei kleinen Lasten auswirkt, eine verringerte Alterung des zusätzlich belasteten Zellstapels zu erwarten ist.

Bei einem nicht-hybridisierten Fahrzeug mit Brennstoffzellen, d.h. einem Fehlen einer Traktionsbatterie, umfasst dieses eine Niedervolt-Starter-Batterie für das An-/Abschalten, wobei im Betrieb des Fahrzeugs eine Versorgung der elektrischen Niedervolt-Komponenten aus dem Brennstoffzellenstapel erfolgt. Es ist nur eine Ladeelektronik geringen Umfangs zur Nachladung der Starterbatterie mit Hilfe eines Stapelmoduls während des Betriebes erforderlich. Die Starterbatterie kann demzufolge sehr klein ausfallen und gegebenenfalls durch einen Kondensator vollständig ersetzt werden.

Mit der erfindungsgemäß vorgeschlagenen Lösung lässt sich der Wirkungsgrad der Brennstoffzelle verbessern, da zwar einzelne der Zellen höher belastet sind und diese einen schlechteren Wirkungsgrad aufweisen, jedoch dies durch die DC/DC-Wandlungsverluste und die Lade- bzw. Entladeverluste der Niedervoltbatterie entfallen. Des Weiteren besteht bei der Brennstoffzelle keine höhere Alterung der zusätzlich belasteten Zellen, was günstig hinsichtlich der erreichbaren Lebensdauer ist.

### Kurze Beschreibung der Zeichnungen

Anhand der Zeichnung wird die Erfindung im Detail erläutert.

Es zeigt:
- Figur 1: eine Ausführungsvariante der erfindungsgemäß vorgeschlagenen Lösung implementiert an einem Batteriefahrzeug und
- Figur 2: eine weitere Ausführungsvariante der erfindungsgemäß vorgeschlagenen Lösung implementiert an einem Brennstoffzellenfahrzeug mit Traktionsbatterie und
- Figur 3: eine Darstellung vertieft ausgebildeter Gasversorgungskanäle zur besseren Versorgung der zusätzlich belasteten Zellen der Brennstoffzelle.

### Ausführungsvarianten

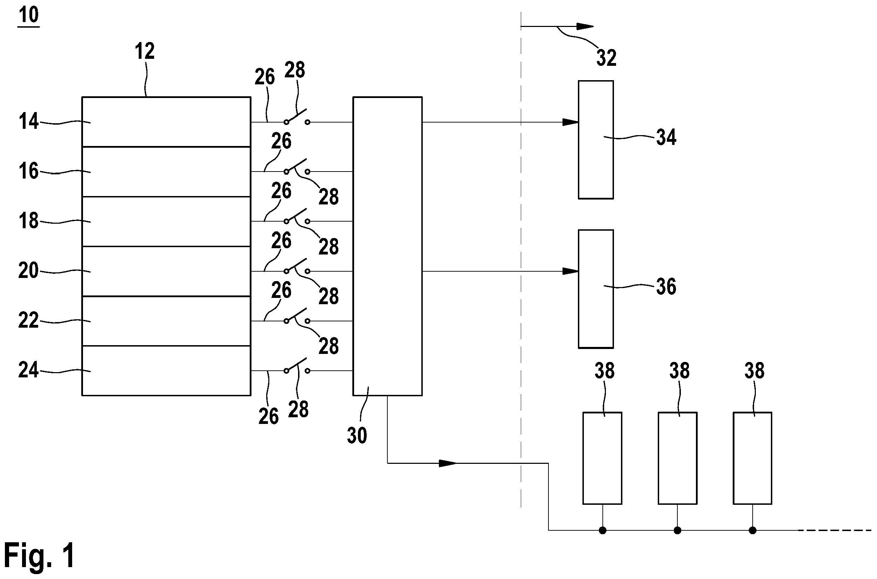

Figur 1 zeigt ein Ausführungsbeispiel der erfindungsgemäß vorgeschlagenen Vorrichtung an einem Batteriefahrzeug mit einer Traktionsbatterie.

Unter Traktionsbatterie oder Batterie wird im Nachfolgenden eine Verschaltung mehrerer Batteriemodule und ein darin integriertes oder davon separates Batteriemanagement verstanden. Unter Modul im vorliegenden Zusammenhang ist eine Verschaltung mehrerer Batteriezellen zu verstehen, eine Zelle bzw. einzelne Zelle stellt eine Grundeinheit mit der Spannung des jeweilig verbauten galvanischen Elementes dar.

Der Darstellung gemäß Figur 1 ist zu entnehmen, dass ein Batteriefahrzeug 10 eine Traktionsbatterie 12 umfasst. Die Traktionsbatterie 12 umfasst in der in Figur 1 beispielhaft dargestellten Ausführungsvariante mehrere Module, so z.B. ein erstes Modul 14, ein zweites Modul 16, ein drittes Modul 18, ein viertes Modul 20, ein fünftes Modul 22 sowie ein sechstes Modul 24. Anstelle der hier aufgezählten sechs Module 14 bis 24 kann die Traktionsbatterie 12 auch eine davon abweichende Anzahl von Modulen enthalten. Wie Figur 1 des Weiteren zeigt, ist der Traktionsbatterie 12 ein Batteriemanagement 30 zugeordnet. Das Batteriemanagement 30 kann sowohl separiert von der Traktionsbatterie 12 angeordnet sein; es besteht andererseits auch die Möglichkeit, wie obenstehend bereits erwähnt, das Batteriemanagement 30 in die Traktionsbatterie 12 zu integrieren. Zwischen den einzelnen Modulen 14 bis 24 der Traktionsbatterie 12 und dem Batteriemanagement 30 erstrecken sich jeweils elektrische Verbindungen 26. Eine jede der elektrischen Verbindungen 26 zwischen den Modulen 14 bis 24 und dem Batteriemanagement 30 umfasst einen Schalter 28, der in der Darstellung gemäß Figur 1 nur schematisch angedeutet ist.

Des Weiteren ist der Darstellung gemäß Figur 1 zu entnehmen, dass das Batteriefahrzeug 10 einen Niederspannungskreis 32 aufweist. Im Niederspannungskreis 32 befinden sich sämtliche elektrische Komponenten, die auf einem Spannungsniveau in der Größenordnung zwischen 11 und 14,8 V betrieben werden. Dazu sind Steuergeräte 34, Komfortelektronik 36, so z.B. Stellantriebe für Fensterscheiben, Schiebedach und dergleichen zu verstehen. Des Weiteren sind Beleuchtungseinrichtungen 38 im Niederspannungskreis 32 des Batteriefahrzeugs 10 integriert.

Mit der erfindungsgemäß vorgeschlagenen Vorrichtung, die in der Darstellung gemäß Figur 1 für ein Batteriefahrzeug 10 exemplarisch dargestellt ist, lässt sich eine Niedervoltspannung erzeugen, die für das An-/Abschalten und zur Versorgung der elektrischen Komponenten 34, 36, 38 des Niederdruckkreises 32 im Batteriefahrzeug 10 benötigt wird. Diese Niedervoltspannung wird direkt von einem einzelnen der Module 14 bis 24 der Traktionsbatterie 12 abgegriffen. Die einzelnen Module 14 bis 24 sind so dimensioniert, dass je nach Betriebs- bzw. Ladezustand die benötigte Spannung auf dem Niederspannungsniveau zwischen typischerweise 11 und 14,8 V zur Verfügung steht. Dadurch kann in vorteilhafter Weise der Verzicht auf einen Hochvolt/Niedervolt-DC/DC-Wandler und je nach Fahrzeugauslegung auf eine andernfalls im Niederdruckkreis zur Realisierung von Abschaltvorgängen vorzusehenden Niedervolt-Batterie ermöglicht werden. Aus der Darstellung gemäß Figur 1 geht hervor, dass bei einem entsprechend ausgebildeten Batteriemanagement 30 sichergestellt ist, dass nicht immer dasselbe der Module 14 bis 24 zum Abgriff bei An- bzw. Abschaltvorgängen oder zur Spannungsversorgung der elektrischen Komponenten 34, 36, 38 des Niederdruckkreises herangezogen wird. Da ein jedes der Module 24 bis 24 über eine separate elektrische Verbindung 26 samt Schalter 28 mit dem Batteriemanagement 30 verbunden ist, kann dieses jeweils abhängig vom Ladezustand der Module 14 bis 24 auf eines der Module 14 bis 24 zurückgreifen. Somit ist sichergestellt, dass zyklischer Durchlauf durch sämtliche der Module 14 bis 24 der Traktionsbatterie 12 sichergestellt ist, so dass nicht stets ein und dasselbe Modul 14, 24 zur Niederdruckspannungsversorgung des Niederdruckkreises 32 herangezogen wird. Durch die in Figur 1 dargestellte Ausführungsvariante der erfindungsgemäß vorgeschlagenen Vorrichtung lässt sich eine erhebliche Kosteneinsparung, eine Verringerung der Systemkomplexität sowie eine Einsparung von Bauraum aufgrund des Verzichtes auf den HV/NV-DC/DC-Wandler erreichen.

Die anhand der Figur 1 skizzierte Vorrichtung kann auch als Ausführungsalternative lediglich zur Niederspannungsversorgung für An-/Ausschaltvorgänge der elektrischen Komponenten 34, 36, 38 des Niederspannungskreises 32 genutzt werden. Diese beim An- bzw. Ausschaltvorgang notwendige Energie ist so gering, so dass der Ladezustand des jeweils die Niederspannungsversorgung sicherstellenden Moduls 14 bis 24 kaum verändert wird. Die Energie zur Versorgung der elektrischen Komponenten 34, 36, 38 des Niederspannungskreises 32 im Fahrzeugbetrieb wird weiterhin über einen DC/DC-Wandler, d.h. schlussendlich von der gesamten Batterie zur Verfügung gestellt, so dass bei dieser Ausführungsvariante zumindest auf eine Niedervolt-Batterie verzichtet werden kann

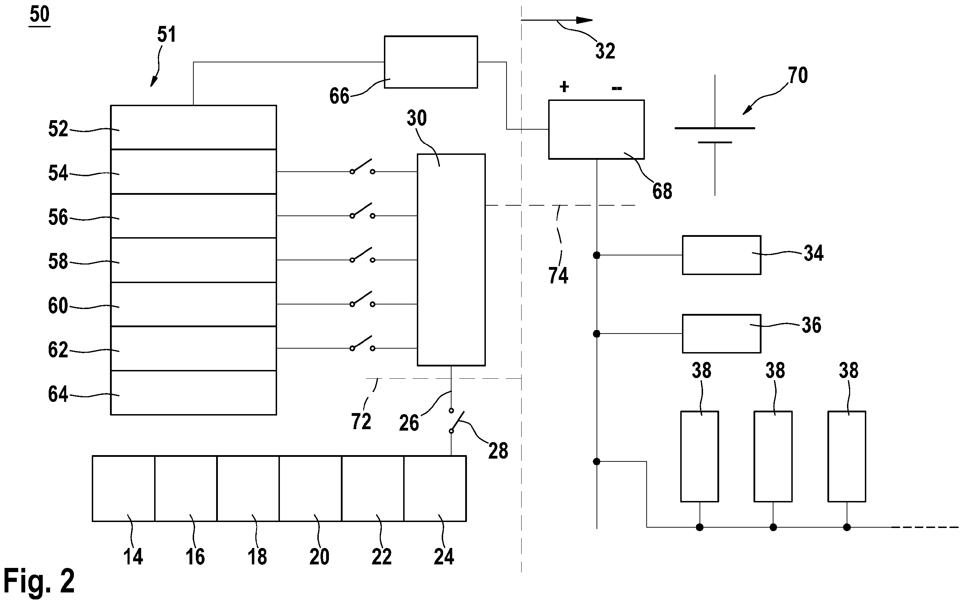

Der Darstellung gemäß Figur 2 ist die erfindungsgemäß vorgeschlagene Vorrichtung, implementiert an einem Brennstoffzellenfahrzeug, zu entnehmen.

Ein Brennstoffzellenfahrzeug 50 umfasst in der in Figur 2 dargestellten Ausführungsvariante ebenfalls eine Traktionsbatterie 12. Der schematische Aufbau gemäß Figur 2 entspricht einem Hybrid aus Brennstoffzelle 51 mit Traktionsbatterie 12 in Form eines Full-Hybriden. Unter Full-Hybrid wird nachfolgend verstanden, dass diese Ausführungsvariante eines Hybridantriebes einen Großteil der verfügbaren Leistungen aus der Brennstoffzelle 51 entnimmt und die Traktionsbatterie 12 lediglich zur Pufferung dient. Weitere Entwicklungstendenzen verlaufen dahingehend, dass in Form eines "Range Extenders" die Brennstoffzelle 51 nur zur Nachladung einer entsprechend größer dimensionierten Traktionsbatterie 12 dient.

Figur 2 zeigt, dass das Brennstoffzellenfahrzeug 50 in der in Figur 2 dargestellten Ausführungsvariante die Traktionsbatterie 12 enthält. Die Traktionsbatterie 12 umfasst die bereits im Zusammenhang mit Figur 1 erwähnten Module, das erste Modul 14, das zweite Modul 16, das dritte Modul 18, das vierte Modul 20, das fünfte Modul 22 sowie das sechste Modul 24. Zwischen einem jeden der Module 14 bis 24 und einem ebenfalls vorgesehenen Batteriemanagement 30 verlaufen jeweils elektrische Verbindungen 26, die mittels des Schalters 28 geöffnet oder geschlossen werden können. Innerhalb eines Systemmanagements erfolgt die Leistungsregelung der Brennstoffzelle 51 sowie das Energiemanagement innerhalb der Traktionsbatterie 12. Beim Management der Brennstoffzelle 51 ist beachtlich, dass die einzelnen Zellstapel 52 bis 60 nicht separat geregelt werden können, sondern nur der gesamte Stapel der Brennstoffzelle 51. Innerhalb dieses Brennstoffzellenstapels 51 erfolgt keine Einzelzellenspannungsüberwachung, was teure Kontaktierungen einspart.

Der Darstellung gemäß Figur 2 ist des Weiteren zu entnehmen, dass das Brennstoffzellenfahrzeug 50 eine Brennstoffzelle 51 umfasst. Diese umfasst einen Stapel von Brennstoffeinzelzellen, d.h. einen ersten Zellstapel 52, einen zweiten Zellstapel 54, einen dritten Zellstapel 56, einen vierten Zellstapel 58, einen fünften Zellstapel 60 sowie einen sechsten Zellstapel 62 und schließlich einen siebten Zellstapel 64. Die Brennstoffzelle 51 gemäß der Darstellung in Figur 2 kann auch eine von den dargestellten sieben Zellstapeln abweichende Anzahl von Zellstapeln enthalten.

Nachfolgend wird vorausgesetzt, dass das Brennstoffzellenfahrzeug 50 gemäß der Darstellung in Figur 2 die Traktionsbatterie 12 enthält. Für diesen Fall übernimmt während des An- bzw. Abschaltens der Komponenten 34, 36, 38 des Niederspannungskreises 32 eines der Module 14, 16, 18, 20, 22, 24 der Traktionsbatterie 12 die Spannungsversorgung der elektrischen Komponenten 34, 36, 38 des Niederdruckkreises 32. Während des An- bzw. Abschaltens des Systems ist die Brennstoffzelle 51 noch nicht in Betrieb und vermag noch keine Spannung zu liefern. Aufgrund des beim An- bzw. Abschalten sowie bei der Durchführung von Systemüberprüfungsläufen niedrigen erforderlichen Energiebedarfes tritt nur eine vernachlässigbare zusätzliche Belastung eines der Module 14, 16, 18, 20, 22, 24 der Traktionsbatterie 12 auf, so dass keine erhöhte Alterung zu erwarten ist. Das jeweils anzusprechende der Module 14, 16, 18, 20, 22, 24, an dem der Spannungsabgriff durch Schließen des Schalters 28 über die elektrische Verbindung 26 schlussendlich zu erfolgen hat, ist abhängig vom Ladezustand der jeweiligen Module 14 bis 24 der Traktionsbatterie 12. Das Batteriemanagement 30 stellt optional sicher, dass nicht stets ein und dasselbe der Module 14 bis 24 zur Deckung des wenn auch geringen Energiebedarfes im Niederspannungskreis 32 herangezogen wird. Bei der Brennstoffzelle 51 ist in der Regel keine erhöhte Alterung zu erwarten, deshalb besteht durchaus die Möglichkeit, stets dasselbe der Module 14, 16, 18, 20, 22, 24 der Traktionsbatterie 12 zu nutzen, um teure Kontaktierungen einzusparen. Das jeweils über das Batteriemanagement 30 mit dem Niederspannungskreis 32 zu verbindende der Module 14, 24 wird durch Schließen des Schalters 28 der jeweiligen elektrischen Verbindung 26 adressiert.

Ist die Brennstoffzelle 51 in Betrieb genommen, so erfolgt während des Systembetriebes die Niederspannungsversorgung der elektrischen Komponenten 34, 36, 38 des Niederspannungskreises 32 bevorzugt von einem der Zellstapel 52, 54, 56, 58, 60, 62, 64 der Brennstoffzelle 51 aus. Alternativ kann eine Niederspannungsversorgung auch durch eines der Module 14, 16, 18, 20, 22, 24 der Traktionsbatterie 12 erfolgen. Diese Zusatzbelastung bedeutet nur eine geringfügige Veränderung des jeweiligen Versorgungszustandes des entsprechenden Zellstapels, der aus der Anzahl der Zellstapel 52 bis 64 zur Versorgung der elektrischen Komponenten 34, 36, 38 des Niederdruckkreises 32 ausgewählt wurde. Die Veränderung des jeweiligen Versorgungszustandes ist vernachlässigbar und kann gegebenenfalls durch einen vergrößerten Querschnitt von Gasversorgungskanälen in den einzelnen Zellstapeln 52 bis 64 kompensiert werden. Für die jeweiligen Zellstapel 52 bis 74 ergibt sich dadurch implizit automatisch eine bessere Gasversorgung, die wiederum günstig für die Strombelastbarkeit ist. Generell gilt, dass sich durch die abgesenkte Betriebsspannung, die sich insbesondere positiv bei kleinen Lasten auswirkt, eine verringerte Alterung des zusätzlich belasteten der Zellstapel 52 bis 64 einstellt.

Fehlt jedoch an einem Brennstoffzellenfahrzeug 50 die Traktionsbatterie 12, die in Figur 2 dargestellt ist, so erfolgt bei einem derart aufgebauten nichthybridisierten Brennstoffzellenfahrzeug der Einbau einer Niedervolt-Starterbatterie 68. In diesem Falle ist das System per Position 72 getrennt, d.h. die Traktionsbatterie 12 ist nicht existent. Bei Vorsehen der Niedervolt-Starterbatterie 68 wird durch diese das für das An-/Abschalten der elektrischen Komponenten 34, 36, 38 erforderliche Niederspannungsniveau zur Verfügung gestellt. Im Betrieb erfolgt eine Versorgung des Niederspannungskreises 32 über die Verbindung 74 aus dem jeweils adressierten Zellstapel 52 bis 64 der Brennstoffzelle 51. Mit Bezugszeichen 66 ist eine Ladeelektronik bezeichnet, die zur Nachladung der Niedervolt-Starterbatterie 68 mit Hilfe der Zellstapel 52 bis 64 der Brennstoffzelle 51 während des Betriebs eingesetzt wird. Die Ladeelektronik 66 ist einfach und kostengünstiger als ein Hochvolt-/Niedervolt-Wandler. Die in dieser abgespeckten Ausführungsvariante des Brennstoffzellenfahrzeuges 50 eingesetzte Starterbatterie 68 kann sehr klein sein oder gegebenenfalls auch wie in der Darstellung gemäß Figur 2 angedeutet, durch einen Kondensator 70 ersetzt werden.

In den beiden in Figur 2 dargestellten Ausführungsvarianten kann ein Hochvolt/Niedervolt-DC-DC-Wandler eingespart werden, bei Vorhandensein einer Traktionsbatterie 12 kann darüber hinaus auch die Niedervolt-Starterbatterie 68 entfallen.

Eine weitere, zeichnerisch nicht dargestellte Ausführungsvariante umfasst eine Brennstoffzelle 51, die Traktionsbatterie 12 sowie eine Niedervoltbatterie, vergleiche Bezugszeichen 68.

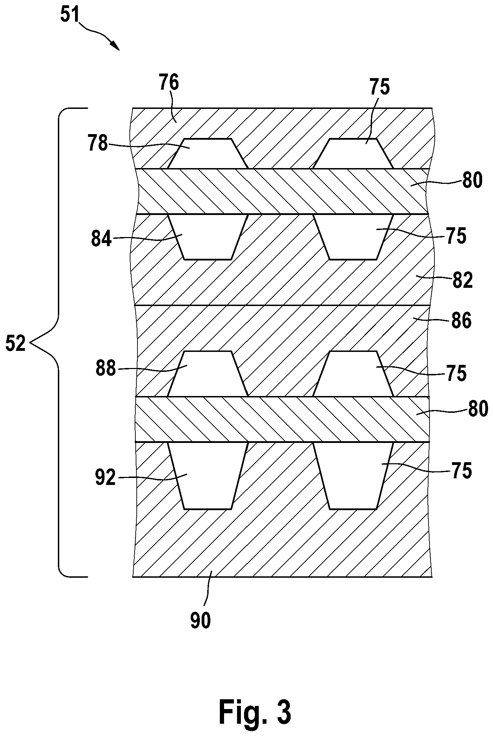

Figur 3 zeigt die Ausbildung vertieft ausgebildeter Gasversorgungskanäle zur besseren Versorgung zusätzlich belasteter Zellen einer Brennstoffzelle in Stapelform.

Figur 3 ist zu entnehmen, dass die Brennstoffzelle 51 unterschiedlich hinsichtlich ihres Durchtrittsquerschnitts dimensionierte Gasversorgungskanäle 75 umfasst. Innerhalb eines beispielsweise in Figur 3 dargestellten ersten Zellstapels 52 befindet sich innerhalb einer Bipolarplatte an der Anode ein Gasversorgungskanal 75 in einem ersten Querschnitt 78. Zwischen der ersten Bipolarplatte 76 der Anode und einer ersten Bipolarplatte kathodenseitig, vergleiche Position 82, ist eine Membranelektrodeneinheit 80 vorgesehen. Der Gasversorgungskanal 75 der ersten Bipolarplatte 76 ist in einem ersten Querschnitt 78 ausgebildet, der hier eine trapezförmige Geometrie aufweist. In der ersten Bipolarplatte kathodenseitig, vergleiche Position 82, weist der Gasversorgungskanal 75 einen vergrößerten zweiten Kanalquerschnitt 84 auf. In einer zweiten Bipolarplatte 86 anodenseitig ist ein dritter Kanalquerschnitt 88 ausgebildet, dem - getrennt durch eine Membranelektrodeneinheit 80 - in einer zweiten Bipolarplatte 90 kathodenseitig ein Gasversorgungskanal 75 gegenüberliegt, der einen vierten Kanalquerschnitt 92 aufweist. Der vierte Kanalquerschnitt des Gasversorgungskanals 75, vergleiche Position 92, übersteigt den zweiten Kanalquerschnitt 84 innerhalb der ersten Bipolarplatte 82 kathodenseitig.

## Patentansprüche

1. Vorrichtung zur Versorgung von elektrischen Komponenten (34, 36, 38) eines Niederspannungskreises (32) mit Niederspannung, wobei die Vorrichtung eine Brennstoffzelle (51) aufweist, wobei Niederspannung für An- und Abschalten, Systemüberprüfungsläufe und/oder zur Versorgung der elektrischen Komponenten (34, 36, 38) von einem der Zellstapel (52-64) der Brennstoffzelle (51) abgegriffen wird, **dadurch gekennzeichnet, dass** der Zellstapel (52-64) der Brennstoffzelle (51) dessen Niederspannung abgegriffen wird hinsichtlich seines Kanalquerschnittes (78, 84, 88, 92) erweiterte Gasversorgungskanäle (75) aufweist.

2. Vorrichtung gemäß Anspruch 1, **dadurch gekennzeichnet, dass** das Spannungsniveau der Niederspannung zwischen 11 V und 14,8 V liegt.

3. Vorrichtung gemäß Anspruch 1, **dadurch gekennzeichnet, dass** der Brennstoffzelle (51) ein Batteriemanagement (30) zugeordnet ist, welches mit einem jeden der Zellstapel (52-64) der Brennstoffzelle (51) verbindbar ist.

4. Vorrichtung zur Versorgung von elektrischen Komponenten (34, 36, 38) eines Niederspannungskreises (32) mit Niederspannung, wobei die Vorrichtung eine Brennstoffzelle (51) aufweist, dass Niederspannung für An-/Abschaltvorgänge, Systemüberprüfungsläufe von einer Starter-Batterie (68) oder einem Kondensator abgegriffen wird und im Betrieb eine Niederspannungsversorgung aus einem der Zellstapel (52-64) der Brennstoffzelle (51) erfolgt, **dadurch gekennzeichnet, dass** der Zellstapel (52-64) der Brennstoffzelle (51) dessen Niederspannung abgegriffen wird hinsichtlich seines Kanalquerschnittes (78, 84, 88, 92) erweiterte Gasversorgungskanäle (75) aufweist.

## Claims

1. Device for supplying electrical components (34, 36, 38) of a low-voltage circuit (32) with low voltage, the device having a fuel cell (51), wherein low voltage for activation and deactivation, system checking runs and/or for supplying the electrical components (34, 36, 38) is tapped from one of the cell stacks (52-64) of the fuel cell (51), **characterized in that** the cell stack (52-64) of the fuel cell (51) from which the low voltage is tapped has widened gas supply channels (75) with regard to the channel cross section (78, 84, 88, 92) thereof.

2. Device according to Claim 1, **characterized in that** the voltage level of the low voltage lies between 11 V and 14.8 V.

3. Device according to Claim 1, **characterized in that** the fuel cell (51) is assigned a battery management (30), which can be connected to each of the cell stacks (52-64) of the fuel cell (51).

4. Device for supplying electrical components (34, 36, 38) of a low-voltage circuit (32) with low voltage, the device having a fuel cell (51), that low voltage for activation/deactivation processes, system checking runs is tapped from a starter battery (68) or a capacitor and during operation a supply of low voltage is provided from one of the cell stacks (52-64) of the fuel cell (51), **characterized in that** the cell stack (52-64) of the fuel cell (51) from which the low voltage is tapped has widened gas supply channels (75) with regard to the channel cross section (78, 84, 88, 92) thereof.

## Revendications

1. Dispositif d'alimentation de composants électriques (34, 36, 38) d'un circuit à basse tension (32) avec une basse tension, dans lequel le dispositif comporte une pile à combustible (51), dans lequel la basse tension est prélevée pour l'activation et la désactivation, des procédures de vérification du système et/ou pour l'alimentation de composants électriques (34, 36, 38) de l'une des piles de cellules (52-64) de la pile à combustible (51), **caractérisé en ce que** la pile de cellules (52-64) de la pile à combustible (51) dont la basse tension est prélevée présente des canaux d'alimentation en gaz (75) élargis en ce qui concerne leur section transversale de canal (78, 84, 88, 92).

2. Dispositif selon la revendication 1, **caractérisé en ce que** le niveau de tension de la basse tension se situe entre 11 V et 14,8 V.

3. Dispositif selon la revendication 1, **caractérisé en ce qu'**il est prévu un système de gestion de batterie (30) associé à la pile à combustible (51), qui peut être connecté à chacune des piles de cellules (52-64) de la pile à combustible (51).

4. Dispositif d'alimentation de composants électriques (34, 36, 38) d'un circuit à basse tension (32) avec une basse tension, dans lequel le dispositif comporte une pile à combustible (51), en ce que la basse tension est prélevée par une batterie de démarreur (68) ou un condensateur pour des processus d'activation/désactivation, des procédures de vérification du système et, lors du fonctionnement, une alimentation à basse tension est effectuée à partir de la pile de cellules (52-64) de la pile à combustible (51), **caractérisé en ce que** la pile de cellules (52-64) de la pile à combustible (51) dont la basse tension est prélevée présente des canaux d'alimentation en gaz (75) élargis en ce qui concerne leur section transversale de canal (78, 84, 88, 92).
